# EUROPEAN PATENT APPLICATION

(11) **EP 4 340 088 A1**
(43) Date of publication of application: **20.03.2024**
(21) Application number: 21941555.1
(22) Date of filing: 10.08.2021
(51) Int. Cl.: H01M 10/052, H01M 4/62, H01M 4/48

(54) **SILICON-BASED NEGATIVE ELECTRODE MATERIAL, PREPARATION METHOD THEREFOR AND APPLICATION THEREOF**

(30) Priority: 13.05.2021 CN 202110524212
(71) Applicant: Tianmulake Excellent Anode Materials Co., Ltd., Liyang, Jiangsu 213330 (CN)
(72) Inventor: LUO, Fei, Liyang, Jiangsu 213330 (CN)
(74) Representative: Glück Kritzenberger Patentanwälte PartGmbB
(86) International application number: PCT/CN2021/111681
(87) International publication number: WO 2022/236986

(57) **Abstract**

The present invention relates to a silicon-based negative electrode material, a preparation method therefor and an application thereof. The silicon-based negative electrode material comprises: a silicon oxide matrix and carbon atoms, wherein the carbon atoms are uniformly distributed in the silicon oxide matrix at an atomic level; the carbon atoms are bonded to silicon atoms to form disordered C-Si bonds, and an X-ray diffraction energy spectrum (XRD) has no SiC crystallization peak. In an X-ray photoelectron spectroscopy (XPS) of the silicon-based negative electrode material, there is a binding peak belonging to the C-Si bond at a location of 283.5 ± 1 eV after a C1s energy spectrum is subjected to peak splitting. The average particle size D₅₀ of the silicon-based negative electrode material particles is 1 nm-100 µm, and the specific surface area is 0.5 m²/g-40 m²/g. The mass of the carbon atoms accounts for 0.1%-40% of the mass of the silicon oxide matrix. According to the present invention, the ultra-fine silicon obtained by gaseous treatment is bonded to highly conductive carbon to form a disordered C-Si bond structure mixed at a molecular level, thereby facilitating slowing down the volume expansion of the material, improving the conductivity of the interior of the silicon oxide, and improving the rapid charging performance of the material.

## Description

This application claims priority for Chinese patent application No. 202110524212.X, entitled "SILICON-BASED NEGATIVE ELECTRODE MATERIAL, PREPARATION METHOD THEREFOR AND APPLICATION THEREOF", filed with China National Intellectual Property Administration on May 13, 2021.

### BACKGROUND OF THE INVENTION

### 1. Technical Field

The present invention relates to the technical field of materials, in particular to a silicon-based negative electrode material, a preparation method therefor and an application thereof.

### 2. Description of Related Art

The pursuit of longer cruising range for new energy vehicles drives the continuous development of high-energy-density power batteries. The New Energy Vehicle Industry Development Plan (2021-2035), released in November 2020, aims to achieve new energy vehicle sales of approximately 20% of the total vehicle sales by 2025. In the development of high-energy-density power batteries, positive electrodes are made from high-nickel ternary materials, and negative electrodes are made from silicon-based negative electrode materials. With the gradual maturation of the silicon-based negative electrode preparation process, silicon-based negative electrodes are expected to gain a stronger foothold in the future market.

Silicon-based negative electrode materials are typically divided into silicon-oxygen negative electrode materials, silicon-carbon negative electrode materials and silicon-based alloy negative electrode materials. The silicon-oxygen negative electrode has high capacity, relatively low expansivity and better cycle performance than other silicon-based negative electrode materials. However, the poor electronic conductivity of silicon oxide leads to poor rate capability of batteries.

In order to improve the rate capability of silicon oxide, carbon coating is often used in the industry. In Patent Application No.CN104022257A, a uniform and dense conductive carbon layer is prepared on a surface of silicon oxide powder, which improves the conductive characteristics of the material and is suitable for high-rate charge and discharge. In Patent Application No.CN110034284A, a carbon nano-wall is grown on a surface of a silicon-based negative electrode, which solves the problem of cracking of a carbon coating during the cycling process and improves the cycle performance of the material. It can be seen that carbon coating is a common way to improve the surface conductivity of silicon oxide.

However, the conductivity of the interior of silicon oxide particles cannot be improved by surface modification, but the improvement of which is necessary in the face of the actual demand for fast charging in future applications.

### BRIEF SUMMARY OF THE INVENTION

The embodiments of the present invention provide a silicon-based negative electrode material, a preparation method therefor and an application thereof. Compared with traditional silicon oxide negative electrode materials, the present invention can effectively improve the conductivity of the interior of the material, improve the rapid charging performance of the material and slow down the volume expansion of the material.

In a first aspect, an embodiment of the present invention provides a silicon-based negative electrode material, including: a silicon oxide matrix and carbon atoms, wherein the carbon atoms are uniformly distributed in the silicon oxide matrix at an atomic level; the carbon atoms are bonded to silicon atoms to form disordered C-Si bonds, and an X-ray diffraction energy spectrum (XRD) has no SiC crystallization peak; in an X-ray photoelectron spectroscopy (XPS) of the silicon-based negative electrode material, there is a binding peak belonging to the C-Si bond at a location of 283.5 ± 1 eV after a C1s energy spectrum is subjected to peak splitting; and

an average particle size D₅₀ of the silicon-based negative electrode material particles is 1 nm-100 µm, a specific surface area is 0.5 m²/g-40 m²/g, and a mass of the carbon atoms accounts for 0.1%-40% of a mass of the silicon oxide matrix.

Preferably, a carbon coating layer is further provided outside the silicon-based negative electrode material, and a mass of the carbon coating layer accounts for 0-20% of the mass of the silicon oxide matrix.

Further preferably, the mass of the carbon atoms accounts for 0.5%-10% of the mass of the silicon oxide matrix, and the mass of the carbon coating layer accounts for 0-10% of the mass of the silicon oxide matrix.

In a second aspect, an embodiment of the present invention provides a preparation method for the silicon-based negative electrode material described in the first aspect, including:
uniformly mixing silicon and silicon dioxide powder in a prescribed amount, and placing the mixture in a first crucible of a vacuum furnace;
putting carbon-containing organic matter into a second crucible of the vacuum furnace in the prescribed amount;
heating the vacuum furnace under reduced pressure, heating the first crucible to 1300-1700°C and the second crucible to 100-1000°C after reducing the pressure to less than 0.1 Torr, and leaving the materials to react for 1-10 hours; and
cooling a mixed vapor generated by heating under reduced pressure at 400-900°C to obtain a silicon oxide material with carbon atoms uniformly distributed at an atomic level after depositing, and pulverizing the deposited material to obtain the silicon-based negative electrode material.

Preferably, the carbon-containing organic matter includes, but is not limited to, one or more of phenolic resin, epoxy resin, glucose, starch, polyacrylonitrile, polyvinylidene fluoride and sodium carboxymethylcellulose.

Preferably, the preparation method further includes: performing a carbon coating on the pulverized material, and obtaining the silicon-based negative electrode material after grading.

Further preferably, the carbon coating includes at least one of gas-phase coating, liquid-phase coating or solid-phase coating.

In a third aspect, an embodiment of the present invention provides a negative plate including the silicon-based negative electrode material described in the first aspect.

In a fourth aspect, an embodiment of the present invention provides a lithium battery including the negative plate described in the third aspect.

According to the present invention, the mixture of silicon and silicon dioxide and the carbon-containing organic matter are heated in the vacuum furnace together, and then cooled and deposited, so that the silicon oxide negative electrode material with carbon atoms uniformly distributed at an atomic level is obtained. Inside the material, carbon atoms are bonded to silicon atoms to form disordered C-Si bonds, there is no SiC crystallization peak in XRD. In XPS detection, and there is a binding peak belonging to the C-Si bond at a location of 283.5 ± 1 eV after a C1s energy spectrum is subjected to peak splitting. Different from a traditional mechanical mixing method, the present invention adopts a gas-phase mixing mode, so that molecular-level superfine silicon is bonded to highly conductive carbon to form a disordered C-Si bond structure mixed at a molecular level, thereby facilitating slowing down the volume expansion of the material, improving the conductivity of the interior of the silicon oxide, and improving the rapid charging performance of the material.

### BRIEF DESCRIPTION OF THE SEVERAL VIEWS OF THE DRAWINGS

The technical solutions of the embodiments of the present invention will be described in further detail with reference to the drawings and embodiments.
Fig. 1 is a flowchart of a preparation method for a silicon-based negative electrode material according to an embodiment of the present invention.
Fig. 2 is an XPS C1s energy spectrum diagram of a silicon-based negative electrode material provided in Embodiment 1 of the present invention.
Fig. 3 is an XRD pattern of a silicon-based negative electrode material provided in Embodiment 1 of the present invention.

### DETAILED DESCRIPTION OF THE INVENTION

The present invention will be further explained below by referring to drawings and specific embodiments, but it should be understood that these embodiments are only for more detailed explanation, and should not be construed as limiting the present invention in any way, that is, not intended to limit the scope of protection of the present invention.

A silicon-based negative electrode material in the present invention includes a silicon oxide matrix and carbon atoms, wherein the carbon atoms are uniformly distributed in the silicon oxide matrix at an atomic level; the carbon atoms are bonded to silicon atoms to form disordered C-Si bonds, and an X-ray diffraction energy spectrum (XRD) has no SiC crystallization peak; in an X-ray photoelectron spectroscopy (XPS) of the silicon-based negative electrode material, there is a binding peak belonging to the C-Si bond at a location of 283.5 ± 1 eV after a C1s energy spectrum is subjected to peak splitting; and
an average particle size D₅₀ of the silicon-based negative electrode material particles is 1 nm-100 µm, a specific surface area is 0.5 m²/g-40 m²/g, and a mass of the carbon atoms accounts for 0.1%-40% of a mass of the silicon oxide matrix. Preferably, the mass of the carbon atoms accounts for 0.5%-10% of the mass of the silicon oxide matrix.

A carbon coating layer is further provided outside the silicon-based negative electrode material, and a mass of the carbon coating layer accounts for 0-20% of the mass of the silicon oxide matrix, and preferably, the mass of the carbon coating layer accounts for 0-10% of the mass of the silicon oxide matrix.

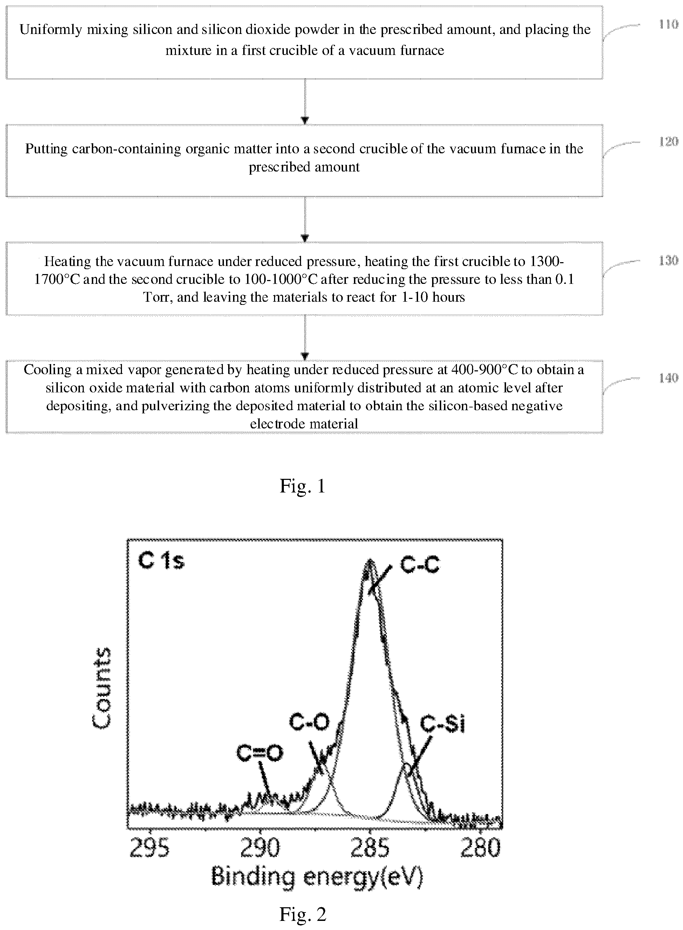

The silicon-based negative electrode material in the present invention can be obtained by the following preparation method. As shown in Fig. 1, the preparation method mainly includes the following steps.

Step 110, silicon and silicon dioxide powder are uniformly mixed in a prescribed amount, and the mixture is placed in a first crucible of a vacuum furnace.

Step 120, carbon-containing organic matter is put into a second crucible of the vacuum furnace in the prescribed amount.

Specifically, the carbon-containing organic matter includes, but is not limited to, one or more of phenolic resin, epoxy resin, glucose, starch, polyacrylonitrile, polyvinylidene fluoride and sodium carboxymethylcellulose;
Step 130, the vacuum furnace is heated under reduced pressure, the first crucible is heated to 1300-1700°C and the second crucible is heated to 100-1000°C after reducing the pressure to less than 0.1 Torr, and the materials are left to react for 1-10 hours.
Step 140, a mixed vapor generated by heating under reduced pressure is cooled at 400-900°C to obtain a silicon oxide material with carbon atoms uniformly distributed at an atomic level after depositing, and the deposited material is pulverized to obtain the silicon-based negative electrode material.

Further, to prepare a silicon-based negative electrode material with a carbon coating layer on the outside, a carbon coating may be performed on the pulverized material, and then the silicon-based negative electrode material is obtained after grading. Specifically, the carbon coating includes at least one of gas-phase coating, liquid-phase coating and solid-phase coating. The above three methods are commonly used in the preparation of battery materials, and will not be explained in detail here.

The material obtained by the present invention is different from a material obtained by a traditional mechanical mixing method in that carbon in the material is no longer agglomerated, instead, gaseous silicon is bonded to gaseous carbon through gas-phase mixing, that is, molecular-level superfine silicon is bonded to highly conductive carbon to form a disordered C-Si bond structure mixed at a molecular level, thereby facilitating slowing down the volume expansion of the material, improving the conductivity of the interior of the silicon oxide, and improving the rapid charging performance of the material.

The silicon-based negative electrode material provided by the present invention can be used for preparing negative plates to be applied to lithium batteries.

In order to better understand the technical solutions provided by the present invention, the specific process of preparing the silicon-based negative electrode material by the method provided in the above embodiment of the present invention, and the method and characteristics of its application in a lithium secondary battery are described below with several specific examples.

### Embodiment 1

3 kg of silicon powder and 4 kg of silicon dioxide powder are uniformly mixed, and then the mixed powder is put in a crucible A of a vacuum furnace; 0.5 kg of phenolic resin is placed in a crucible B of the vacuum furnace; a furnace door is closed, vacuumizing is performed until the pressure is lower than 0.1 Torr, then the crucible A is heated to 1400°C and the crucible B is heated to 500°C, and the materials are left to react for 7 hours; and a mixed vapor is cooled and deposited at 400°C, and a material output is pulverized to obtain silicon oxide with carbon atoms uniformly distributed at an atomic level.

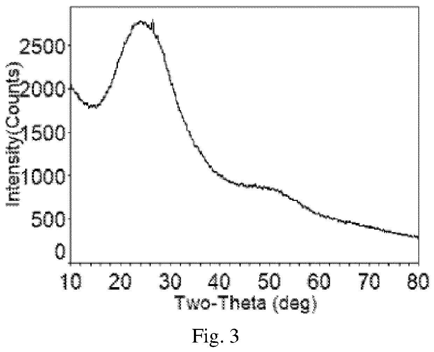

It is tested, by a carbon-sulfur analyzer, that the carbon content is 1.5%. An XPS test is carried out on the silicon oxide with carbon atoms uniformly distributed at an atomic level prepared in this embodiment, to obtain a C1s energy spectrum. The results of peak splitting and fitting are shown in Fig. 2, from which it can be seen that at the location of 283.35 eV, a C-Si binding peak appears. An XRD pattern is obtained by an XRD test, and the results are shown in Fig. 3, from which it can be seen that the silicon oxide with carbon atoms uniformly distributed at an atomic level in this embodiment is of an amorphous structure, and there is no SiC crystallization peak.

Then, carbon coating is performed on the silicon oxide with carbon atoms uniformly distributed at an atomic level. 4 kg of the material is placed in a rotary furnace, the temperature is raised to 1000°C under the protection of chlorine, and then chlorine and mixed gas of propylene and methane with the same volume as chlorine are introduced for gas-phase coating, wherein the volume ratio of propylene to methane is 2:3; and the temperature is kept for 3 hours, an organic gas source is turned off, and after cooling, a carbon-coated silicon oxide material with carbon atoms uniformly distributed at an atomic level is obtained. It is tested, by a carbon-sulfur analyzer, that the total carbon content is 5.5%.

The carbon-coated silicon oxide material with carbon atoms uniformly distributed at an atomic level is used as a negative electrode material. The negative electrode material, conductive carbon black (SP) serving as a conductive additive, and polyvinylidene fluoride (PVDF) serving as an adhesive are weighed according to the ratio of 95% : 2% : 3%, and slurry is prepared in a beater at room temperature. The prepared slurry is evenly applied to copper foil. After being dried in a blast drying oven at 50°C for 2 hours, the material is cut into 8×8 mm pole pieces, and then vacuum drying is performed in a vacuum drying oven at 100°C for 10 hours. The dried pole pieces are immediately transferred into a glove box for battery assembly.

Simulated battery assembly is performed in a glove box containing a high purity Ar atmosphere, with lithium metal serving as a counter electrode and a solution of 1 mol LiPF₆ in ethylene carbonate/dimethyl carbonate (EC/DMC V:V = 1:1) as an electrolyte. A constant current charge-discharge mode test is carried out by using a charge-discharge instrument. The discharge cut-off voltage is 0.005 V and the charge cut-off voltage is 1.5 V A first cycle of charge-discharge test is carried out at C/10 current density, and a second cycle of discharge test is carried out at C/10 current density. The test results of initial efficiency, 5C reversible capacity and cycle performance at 5C rate are listed in Table 1.

### Embodiment 2

10 kg of silicon powder and 10 kg of silicon dioxide powder are uniformly mixed, and then the mixed powder is put in a crucible A of a vacuum furnace; 2 kg of epoxy resin is placed in a crucible B of the vacuum furnace; a furnace door is closed, vacuumizing is performed until the pressure is lower than 0.1 Torr, then the crucible A is heated to 1400°C and the crucible B is heated to 600°C, and the materials are left to react for 7 hours; and a mixed vapor is cooled and deposited at 400°C, and a material output is pulverized to obtain a silicon oxide negative electrode material with carbon atoms uniformly distributed at an atomic level. It is tested, by a carbon-sulfur analyzer, that the carbon content is 2%. Then, carbon coating is performed on the pulverized material. 2 kg of the material is placed in a rotary furnace, the temperature is raised to 900°C under the protection of chlorine, and then mixed gas of chlorine and propylene is introduced according to the volume ratio of 1:1 for gas-phase coating; and the temperature is kept for 3 hours, an organic gas source is turned off, and after cooling, a carbon-coated silicon oxide material with carbon atoms uniformly distributed at an atomic level is obtained. It is tested, by a carbon-sulfur analyzer, that the total carbon content is 4.5%.

The preparation process of a negative plate, battery assembly and battery testing are the same as those in Embodiment 1. The test results of initial efficiency, 5C reversible capacity and cycle performance at 5C rate are listed in Table 1.

### Embodiment 3

15 kg of silicon powder and 6 kg of silicon dioxide powder are uniformly mixed, and then the mixed powder is put in a crucible A of a vacuum furnace; 0.9 kg of glucose is placed in a crucible B of the vacuum furnace; a furnace door is closed, vacuumizing is performed until the pressure is lower than 0. 1 Torr, then the crucible A is heated to 1400°C and the crucible B is heated to 300°C, and the materials are left to react for 7 hours; and a mixed vapor is cooled and deposited at 400°C, and a material output is pulverized to obtain a silicon oxide negative electrode material with carbon atoms uniformly distributed at an atomic level. It is tested, by a carbon-sulfur analyzer, that the carbon content is 1.5%. Then, carbon coating is performed on the pulverized material. The pulverized material is mixed with petroleum asphalt according to the mass ratio of 20:1, and placed in a high-temperature furnace for heat treatment at 900°C in a nitrogen atmosphere for 2 hours. After cooling and grading, a carbon-coated silicon oxide material with carbon atoms uniformly distributed at an atomic level is obtained, of which the total carbon content is 5%.

The preparation process of a negative plate, battery assembly and battery testing are the same as those in Embodiment 1. The test results of initial efficiency, 5C reversible capacity and cycle performance at 5C rate are listed in Table 1.

### Embodiment 4

7 kg of silicon powder and 5 kg of silicon dioxide powder are uniformly mixed, and then the mixed powder is put in a crucible A of a vacuum furnace; 0.3 kg of starch is placed in a crucible B of the vacuum furnace; a furnace door is closed, vacuumizing is performed until the pressure is lower than 0.1 Torr, then the crucible A is heated to 1400°C and the crucible B is heated to 380°C, and the materials are left to react for 4 hours; and a mixed vapor is cooled and deposited at 400°C, and a material output is pulverized to obtain a silicon oxide negative electrode material with carbon atoms uniformly distributed at an atomic level. It is tested, by a carbon-sulfur analyzer, that the carbon content is 1.2%. Then, carbon coating is performed on the pulverized material. 2 kg of the material is placed in a rotary furnace, the temperature is raised to 1100°C under the protection of argon, and then argon and acetylene are introduced according to the volume ratio of 1:2 for gas-phase coating; and the temperature is kept for 3 hours, an organic gas source is turned off, and after cooling, the carbon-coated silicon oxide material with carbon atoms uniformly distributed at an atomic level is obtained, of which the total carbon content is 6%.

The preparation process of a negative plate, battery assembly and battery testing are the same as those in Embodiment 1. The test results of initial efficiency, 5C reversible capacity and cycle performance at 5C rate are listed in Table 1.

### Embodiment 5

5 kg of silicon powder and 5 kg of silicon dioxide powder are uniformly mixed, and then the mixed powder is put in a crucible A of a vacuum furnace; 0.6 kg of polyacrylonitrile is placed in a crucible B of the vacuum furnace; a furnace door is closed, vacuumizing is performed until the pressure is lower than 0.1 Torr, then the crucible A is heated to 1400°C and the crucible B is heated to 700°C, and the materials are left to react for 2 hours; and a mixed vapor is cooled and deposited at 400°C, and a material output is pulverized to obtain a silicon oxide negative electrode material with carbon atoms uniformly distributed at an atomic level. It is tested, by a carbon-sulfur analyzer, that the carbon content is 2%. Then, carbon coating is performed on the pulverized material. 2 kg of the material is placed in a rotary furnace, the temperature is raised to 1100°C under the protection of argon, and then argon and methane are introduced according to the volume ratio of 1:1 for gas-phase coating; and the temperature is kept for 2 hours, an organic gas source is turned off, and after cooling, the carbon-coated silicon oxide material with carbon atoms uniformly distributed at an atomic level is obtained, of which the total carbon content is 5%.

The preparation process of a negative plate, battery assembly and battery testing are the same as those in Embodiment 1. The test results of initial efficiency, 5C reversible capacity and cycle performance at 5C rate are listed in Table 1.

### Embodiment 6

7 kg of silicon powder and 9 kg of silicon dioxide powder are uniformly mixed, and then the mixed powder is put in a crucible A of a vacuum furnace; 0.5 kg of polyvinylidene fluoride is placed in a crucible B of the vacuum furnace; a furnace door is closed, vacuumizing is performed until the pressure is lower than 0.1 Torr, then the crucible A is heated to 1300°C and the crucible B is heated to 400°C, and the materials are left to react for 2 hours; and a mixed vapor is cooled and deposited at 400°C, and a material output is pulverized to obtain a silicon oxide negative electrode material with carbon atoms uniformly distributed at an atomic level. It is tested, by a carbon-sulfur analyzer, that the carbon content is 0.8%. Then, carbon coating is performed on the pulverized material. 2 kg of the material is placed in a rotary furnace, the temperature is raised to 1100°C under the protection of argon, and then argon and mixed gas of propylene and methane with the same volume as argon are introduced for gas-phase coating, wherein the volume ratio of propylene to methane is 2:3; and the temperature is kept for 2 hours, an organic gas source is turned off, and after cooling, the carbon-coated silicon oxide material with carbon atoms uniformly distributed at an atomic level is obtained, of which the total carbon content is 5.8%.

The preparation process of a negative plate, battery assembly and battery testing are the same as those in Embodiment 1. The test results of initial efficiency, 5C reversible capacity and cycle performance at 5C rate are listed in Table 1.

### Embodiment 7

3 kg of silicon powder and 4 kg of silicon dioxide powder are uniformly mixed, and then the mixed powder is put in a crucible A of a vacuum furnace; 0.3 kg of sodium carboxymethylcellulose is placed in a crucible B of the vacuum furnace; a furnace door is closed, vacuumizing is performed until the pressure is lower than 0.1 Torr, then the crucible A is heated to 1300°C and the crucible B is heated to 600°C, and the materials are left to react for 2 hours; and a mixed vapor is cooled and deposited at 400°C, and a material output is pulverized to obtain a silicon oxide negative electrode material with carbon atoms uniformly distributed at an atomic level. It is tested, by a carbon-sulfur analyzer, that the carbon content is 3%. Then, carbon coating is performed on the pulverized material. 2 kg of the material is placed in a rotary furnace, the temperature is raised to 1100°C under the protection of argon, and then argon and mixed gas of propylene and methane with the same volume as argon are introduced for gas-phase coating, wherein the volume ratio of propylene to methane is 2:3; and the temperature is kept for 2 hours, an organic gas source is turned off, and after cooling, the carbon-coated silicon oxide material with carbon atoms uniformly distributed at an atomic level is obtained, of which the total carbon content is 7%.

The preparation process of a negative plate, battery assembly and battery testing are the same as those in Embodiment 1. The test results of initial efficiency, 5C reversible capacity and cycle performance at 5C rate are listed in Table 1.

### Embodiment 8

7 kg of silicon powder and 6 kg of silicon dioxide powder are uniformly mixed, and then the mixed powder is put in a crucible A of a vacuum furnace; 0.2 kg of sodium carboxymethylcellulose and 0.3 kg of epoxy resin are uniformly mixed, and then the mixed powder is placed in a crucible B of the vacuum furnace; a furnace door is closed, vacuumizing is performed until the pressure is lower than 0. 1 Torr, then the crucible A is heated to 1300°C and the crucible B is heated to 600°C, and the materials are left to react for 2 hours; and a mixed vapor is cooled and deposited at 400°C, and a material output is pulverized to obtain a silicon oxide negative electrode material with carbon atoms uniformly distributed at an atomic level. It is tested, by a carbon-sulfur analyzer, that the carbon content is 2.6%. Then, carbon coating is performed on the pulverized material. The pulverized material is mixed with petroleum asphalt according to the mass ratio of 20:1, and placed in a high-temperature furnace for heat treatment at 900°C in a nitrogen atmosphere for 2 hours. After cooling and grading, a carbon-coated silicon oxide material with carbon atoms uniformly distributed at an atomic level is obtained, of which the total carbon content is 4.5%.

The preparation process of a negative plate, battery assembly and battery testing are the same as those in Embodiment 1. The test results of initial efficiency, 5C reversible capacity and cycle performance at 5C rate are listed in Table 1.

### Embodiment 9

6 kg of silicon powder and 5 kg of silicon dioxide powder are uniformly mixed, and then the mixed powder is put in a crucible A of a vacuum furnace; 0.2 kg of phenolic resin and 0.3 kg of epoxy resin are uniformly mixed, and then the mixed powder is placed in a crucible B of the vacuum furnace; a furnace door is closed, vacuumizing is performed until the pressure is lower than 0.1 Torr, then the crucible A is heated to 1300°C and the crucible B is heated to 400°C, and the materials are left to react for 3 hours; and a mixed vapor is cooled and deposited at 400°C, and a material output is pulverized to obtain a silicon oxide negative electrode material with carbon atoms uniformly distributed at an atomic level. It is tested, by a carbon-sulfur analyzer, that the carbon content is 3%.

The preparation process of a negative plate, battery assembly and battery testing are the same as those in Embodiment 1. The test results of initial efficiency, 5C reversible capacity and cycle performance at 5C rate are listed in Table 1.

### Embodiment 10

3 kg of silicon powder and 4 kg of silicon dioxide powder are uniformly mixed, and then the mixed powder is put in a crucible A of a vacuum furnace; 0.3 kg of sodium carboxymethylcellulose is placed in a crucible B of the vacuum furnace; a furnace door is closed, vacuumizing is performed until the pressure is lower than 0.1 Torr, then the crucible A is heated to 1300°C and the crucible B is heated to 600°C, and the materials are left to react for 2 hours; and a mixed vapor is cooled and deposited at 400°C, and a material output is pulverized to obtain a silicon oxide negative electrode material with carbon atoms uniformly distributed at an atomic level. It is tested, by a carbon-sulfur analyzer, that the carbon content is 3%.

The preparation process of a negative plate, battery assembly and battery testing are the same as those in Embodiment 1. The test results of initial efficiency, 5C reversible capacity and cycle performance at 5C rate are listed in Table 1.

### Embodiment 11

10 kg of silicon powder and 12 kg of silicon dioxide powder are uniformly mixed, and then the mixed powder is put in a crucible A of a vacuum furnace; 0.2 kg of phenolic resin, 0.3 kg of polyacrylonitrile and 0.8 kg of sodium carboxymethylcellulose are uniformly mixed, and then the mixed powder is placed in a crucible B of the vacuum furnace; a furnace door is closed, vacuumizing is performed until the pressure is lower than 0.1 Torr, then the crucible A is heated to 1300°C and the crucible B is heated to 600°C, and the materials are left to react for 5 hours; and a mixed vapor is cooled and deposited at 400°C, and a material output is pulverized to obtain a silicon oxide negative electrode material with carbon atoms uniformly distributed at an atomic level. It is tested, by a carbon-sulfur analyzer, that the carbon content is 3%. Then, carbon coating is performed on the pulverized material. The pulverized material and phenolic resin are dissolved in an alcohol solvent according to the ratio of 20:1, and stirred for 6 hours to form uniform slurry. After that, the slurry is directly dried and placed in a high-temperature furnace, and the mixture is sintered for 2 hours at 900°C under the protection of nitrogen gas. After cooling, grading and screening are performed to obtain a carbon-coated silicon oxide material with carbon atoms uniformly distributed at an atomic level, of which the total carbon content is 3.8%.

The preparation process of a negative plate, battery assembly and battery testing are the same as those in Embodiment 1. The test results of initial efficiency, 5C reversible capacity and cycle performance at 5C rate are listed in Table 1.

### Embodiment 12

3 kg of silicon powder and 3 kg of silicon dioxide powder are uniformly mixed, and then the mixed powder is put in a crucible A of a vacuum furnace; 0.4 kg of glucose and 0.4 kg of starch are uniformly mixed, and then the mixed powder is placed in a crucible B of the vacuum furnace; a furnace door is closed, vacuumizing is performed until the pressure is lower than 0.1 Torr, then the crucible A is heated to 1300°C and the crucible B is heated to 600°C, and the materials are left to react for 5 hours; and a mixed vapor is cooled and deposited at 600°C, and a material output is pulverized to obtain a silicon oxide negative electrode material with carbon atoms uniformly distributed at an atomic level. It is tested, by a carbon-sulfur analyzer, that the carbon content is 4%. Then, carbon coating is performed on the pulverized material. The pulverized material and phenolic resin are dissolved in an alcohol solvent according to the ratio of 20:1, and stirred for 6 hours to form uniform slurry. After that, the slurry is directly dried and placed in a high-temperature furnace, and the mixture is sintered for 2 hours at 900°C under the protection of nitrogen gas. After cooling, grading and screening are performed to obtain a carbon-coated silicon oxide material with carbon atoms uniformly distributed at an atomic level, of which the total carbon content is 6.8%.

The carbon-coated silicon oxide material with carbon atoms uniformly distributed at an atomic level is used as a negative electrode material. The negative electrode material, conductive carbon black (SP) serving as a conductive additive, and polyvinylidene fluoride (PVDF) serving as an adhesive are weighed according to the ratio of 95% : 2% : 3%, and slurry is prepared in a beater at room temperature. The prepared slurry is evenly applied to copper foil. After being dried in a blast drying oven at 50°C for 2 hours, the material is cut into 8×8 mm pole pieces, and then vacuum drying is performed in a vacuum drying oven at 100°C for 10 hours. The dried pole pieces are immediately transferred into a glove box for battery assembly.

Simulated battery assembly is performed in a glove box containing a high purity Ar atmosphere, with the above electrode serving as a negative electrode, a ternary positive electrode material NCM811 as a counter electrode, and garnet-type Li₇La₃Zr₂O₁₂ (LLZO) as a solid electrolyte. An all-solid-state button battery is assembled in the glove box, and is charged to evaluate its electrochemical performance. A constant current charge-discharge mode test is carried out by using a charge-discharge instrument. The discharge cut-off voltage is 0.005 V and the charge cut-off voltage is 1.5 V A first cycle of charge-discharge test is carried out at C/10 current density, and a second cycle of discharge test is carried out at C/10 current density. The test results of initial efficiency, 5C reversible capacity and cycle performance at 5C rate are listed in Table 1.

### Embodiment 13

6 kg of silicon powder and 5 kg of silicon dioxide powder are uniformly mixed, and then the mixed powder is put in a crucible A of a vacuum furnace; 0.4 kg of epoxy resin, 0.3 kg of starch and 0.6 kg of polyvinylidene fluoride are uniformly mixed, and then the mixed powder is placed in a crucible B of the vacuum furnace; a furnace door is closed, vacuumizing is performed until the pressure is lower than 0.1 Torr, then the crucible A is heated to 1300°C and the crucible B is heated to 600°C, and the materials are left to react for 6 hours; and a mixed vapor is cooled and deposited at 700°C, and a material output is pulverized to obtain a silicon oxide negative electrode material with carbon atoms uniformly distributed at an atomic level. It is tested, by a carbon-sulfur analyzer, that the carbon content is 4%. Then, carbon coating is performed on the pulverized material. 2 kg of the material is placed in a rotary furnace, the temperature is raised to 1100°C under the protection of argon, and then argon and mixed gas of propylene and methane with the same volume as argon are introduced for gas-phase coating, wherein the volume ratio of propylene to methane is 1:3; and the temperature is kept for 3 hours, an organic gas source is turned off, and after cooling, the carbon-coated silicon oxide material with carbon atoms uniformly distributed at an atomic level is obtained, of which the total carbon content is 6%.

The carbon-coated silicon oxide material with carbon atoms uniformly distributed at an atomic level is used as a negative electrode material. The negative electrode material, conductive carbon black (SP) serving as a conductive additive, and polyvinylidene fluoride (PVDF) serving as an adhesive are weighed according to the ratio of 95% : 2% : 3%, and slurry is prepared in a beater at room temperature. The prepared slurry is evenly applied to copper foil. After being dried in a blast drying oven at 50°C for 2 hours, the material is cut into 8×8 mm pole pieces, and then vacuum drying is performed in a vacuum drying oven at 100°C for 10 hours. The dried pole pieces are immediately transferred into a glove box for battery assembly.

Simulated battery assembly is performed in a glove box containing a high purity Ar atmosphere, with the above electrode serving as a negative electrode, a ternary positive electrode material NCM811 as a counter electrode, and a polyolefin-based gel polymer electrolyte membrane as a semi-solid electrolyte. A semi-solid-state button battery is assembled in the glove box, and is charged to evaluate its electrochemical performance. A constant current charge-discharge mode test is carried out by using a charge-discharge instrument. The discharge cut-off voltage is 0.005 V and the charge cut-off voltage is 1.5 V. A first cycle of charge-discharge test is carried out at C/10 current density, and a second cycle of discharge test is carried out at C/10 current density. The test results of initial efficiency, 5C reversible capacity and cycle performance at 5C rate are listed in Table 1.

### Embodiment 14

3 kg of silicon powder and 5 kg of silicon dioxide powder are uniformly mixed, and then the mixed powder is put in a crucible A of a vacuum furnace; 0.4 kg of epoxy resin and 0.6 kg of polyvinylidene fluoride are uniformly mixed, and then the mixed powder is placed in a crucible B of the vacuum furnace; a furnace door is closed, vacuumizing is performed until the pressure is lower than 0.1 Torr, then the crucible A is heated to 1400°C and the crucible B is heated to 400°C, and the materials are left to react for 2 hours; and a mixed vapor is cooled and deposited at 700°C, and a material output is pulverized to obtain a silicon oxide negative electrode material with carbon atoms uniformly distributed at an atomic level. It is tested, by a carbon-sulfur analyzer , that the carbon content is 3%.

The preparation process of a negative plate, battery assembly and battery testing are the same as those in Embodiment 1. The test results of initial efficiency, 5C reversible capacity and cycle performance at 5C rate are listed in Table 1.

### Comparative example 1

3 kg of silicon powder and 4 kg of silicon dioxide powder are uniformly mixed, and then the mixed powder is put in a crucible A of a vacuum furnace; a furnace door is closed, vacuumizing is performed until the pressure is lower than 0.1 Torr, then the crucible A is heated to 1400°C, and the materials are left to react for 7 hours; and a vapor is cooled and deposited at 400°C, and a material output is pulverized.

Then, carbon coating is performed on the pulverized material. 4 kg of the material is placed in a rotary furnace, the temperature is raised to 1000°C under the protection of argon, and then argon and mixed gas of propylene and methane with the same volume as argon are introduced for gas-phase coating, wherein the volume ratio of propylene to methane is 2:3; and the temperature is kept for 3 hours, and an organic gas source is turned off. It is tested, by a carbon-sulfur analyzer, that the total carbon content is 3%.

The preparation process of a negative plate, battery assembly and battery testing are the same as those in Embodiment 1. The test results of initial efficiency, 5C reversible capacity and cycle performance at 5C rate are listed in Table 1.

The test results of initial efficiency, 5C reversible capacity and cycle performance at 5C rate of the negative electrode materials in Embodiments 1-14 and Comparative example 1 are as follows.

**Table 1**

| | Initial efficiency | 5C reversible capacity (mAh/g) | 100-cycle retention ratio% at 5C rate | 500-cycle retention ratio% at 5C rate |
|---|---|---|---|---|
| Embodiment 1 | 77.67 | 1788 | 83 | 67 |
| Embodiment 2 | 77.18 | 1741 | 84 | 69 |
| Embodiment 3 | 77.24 | 1734 | 82 | 71 |
| Embodiment 4 | 77.77 | 1765 | 85 | 72 |
| Embodiment 5 | 77.63 | 1705 | 82 | 69 |
| Embodiment 6 | 77.32 | 1735 | 83 | 68 |
| Embodiment 7 | 77.69 | 1732 | 83 | 67 |
| Embodiment 8 | 76.98 | 1709 | 79 | 68 |
| Embodiment 9 | 76.59 | 1750 | 79 | 69 |
| Embodiment 10 | 76.93 | 1727 | 80 | 67 |
| Embodiment 11 | 77.6 | 1712 | 79 | 67 |
| Embodiment 12 | 76.76 | 1743 | 79 | 68 |
| Embodiment 13 | 76.65 | 1705 | 80 | 70 |
| Embodiment 14 | 77.49 | 1721 | 79 | 67 |
| Comparative example 1 | 77.38 | 1749 | 53 | 42 |

As can be seen from the data in the table, under the same test conditions, in Embodiments 1-14, the mixture of silicon and silicon dioxide and the carbon-containing organic matter are heated in the vacuum furnace together, and then cooled and deposited, so that the silicon oxide material with carbon atoms distributed at an atomic level is obtained. A gas-phase mixing mode is adopted, so that superfine silicon is bonded to highly conductive carbon to form a disordered Si-C bond structure mixed at a molecular level, thereby facilitating slowing down the volume expansion of the material, improving the conductivity of the interior of the silicon oxide, and improving the rate performance and cycle performance of the material.

The above-mentioned specific embodiments further explain the purpose, technical solutions and beneficial effects of the present invention in detail. It should be understood that the above embodiments are only specific ones of the present invention and are not used to limit the scope of protection of the present invention. Any modification, equivalent substitution, improvement, etc. made within the spirit and principles of the present invention should be included in the scope of protection of the present invention.

## Claims

1. A silicon-based negative electrode material, comprising a silicon oxide matrix and carbon atoms, wherein the carbon atoms are uniformly distributed in the silicon oxide matrix at an atomic level; the carbon atoms are bonded to silicon atoms to form disordered C-Si bonds, and an X-ray diffraction energy spectrum (XRD) has no SiC crystallization peak; in an X-ray photoelectron spectroscopy (XPS) of the silicon-based negative electrode material, there is a binding peak belonging to the C-Si bond at a location of 283.5 ± 1 eV after a C1s energy spectrum is subjected to peak splitting; and
an average particle size D₅₀ of the silicon-based negative electrode material particles is 1 nm-100 µm, a specific surface area is 0.5 m²/g-40 m²/g, and a mass of the carbon atoms accounts for 0.1%-40% of a mass of the silicon oxide matrix.

2. The silicon-based negative electrode material according to claim 1, wherein a carbon coating layer is further provided outside the silicon-based negative electrode material, and a mass of the carbon coating layer accounts for 0-20% of the mass of the silicon oxide matrix.

3. The silicon-based negative electrode material according to claim 2, wherein the mass of the carbon atoms accounts for 0.5%-10% of the mass of the silicon oxide matrix, and the mass of the carbon coating layer accounts for 0-10% of the mass of the silicon oxide matrix.

4. A preparation method for the silicon-based negative electrode material according to any one of claims 1-3, comprising:
uniformly mixing silicon and silicon dioxide powder in a prescribed amount, and placing the mixture in a first crucible of a vacuum furnace;
putting carbon-containing organic matter into a second crucible of the vacuum furnace in the prescribed amount;
heating the vacuum furnace under reduced pressure, heating the first crucible to 1300-1700°C and the second crucible to 100-1000°C after reducing the pressure to less than 0.1 Torr, and leaving the materials to react for 1-10 hours; and
cooling a mixed vapor generated by heating under reduced pressure at 400-900°C to obtain a silicon oxide material with carbon atoms uniformly distributed at an atomic level after depositing, and pulverizing the deposited material to obtain the silicon-based negative electrode material.

5. The preparation method according to claim 4, wherein the carbon-containing organic matter comprises one or more of phenolic resin, epoxy resin, glucose, starch, polyacrylonitrile, polyvinylidene fluoride and sodium carboxymethylcellulose.

6. The preparation method according to claim 4, further comprising:
performing a carbon coating on the pulverized material, and obtaining the silicon-based negative electrode material after grading.

7. The preparation method according to claim 6, wherein the carbon coating comprises at least one of gas-phase coating, liquid-phase coating or solid-phase coating.

8. A negative plate comprising the silicon-based negative electrode material according to any one of claims 1-3.

9. A lithium battery comprising the negative plate according to claim 8.
